(19) Europäisches Patentamt
European Patent Office
Office européen des brevets

(11) **EP 1 689 582 B1**

(12) **EUROPEAN PATENT SPECIFICATION**

(45) Date of publication and mention
of the grant of the patent:
**13.02.2013 Bulletin 2013/07**

(51) Int Cl.:
*B32B 27/30* (2006.01)          *B32B 27/36* (2006.01)
*B32B 27/40* (2006.01)          *B32B 5/18* (2006.01)
*C08J 5/18* (2006.01)          *B32B 27/12* (2006.01)

(21) Application number: **04813119.7**

(22) Date of filing: **02.12.2004**

(86) International application number:
**PCT/US2004/040748**

(87) International publication number:
**WO 2005/056290 (23.06.2005 Gazette 2005/25)**

(54) **NOVEL POLYMER FILMS AND TEXTILE LAMINATES CONTAINING SUCH POLYMER FILMS**

NEUE POLYMERFOLIEN UND SOLCHE POLYMERFOLIEN ENTHALTENDE TEXTILLAMINATE

NOUVEAUX FILMS POLYMERES ET LAMINES TEXTILES CONTENANT DE TELS FILMS POLYMERES

(84) Designated Contracting States:
**AT BE BG CH CY CZ DE DK EE ES FI FR GB GR HU IE IS IT LI LT LU MC NL PL PT RO SE SI SK TR**

(30) Priority: **03.12.2003 US 728353**

(43) Date of publication of application:
**16.08.2006 Bulletin 2006/33**

(73) Proprietor: **Gore Enterprise Holdings, Inc.
Newark, DE 19714-9206 (US)**

(72) Inventors:
• **NORVELL, Jean
Newark, DE 19713 (US)**
• **LACK, Craig
Hockessin, DE 19707 (US)**

(74) Representative: **Shanks, Andrew et al
Marks & Clerk LLP
Aurora
120 Bothwell Street
Glasgow
G2 7JS (GB)**

(56) References cited:
**EP-A- 0 319 222          EP-A2- 1 153 737
WO-A-00/38915          DE-A1- 3 436 065
US-A- 4 598 003          US-A- 4 609 584
US-A- 5 897 541          US-A1- 2003 067 091
US-A1- 2004 047 986      US-B1- 6 277 479**

• **DATABASE WPI Section Ch, Week 197822 Derwent Publications Ltd., London, GB; Class A35, AN 1978-39376A XP002320200 & JP 53 044214 A (TOPPAN PRINTING CO LTD) 20 April 1978 (1978-04-20)**
• **PATENT ABSTRACTS OF JAPAN vol. 2000, no. 03, 30 March 2000 (2000-03-30) & JP 11 349702 A (KAO CORP), 21 December 1999 (1999-12-21)**

## Description

## FIELD OF THE INVENTION

This invention relates to methods for making polymer films and laminates comprising such films and at least one textile material that provide, among other things, improved aesthetics.

## BACKGROUND OF THE INVENTION

Porous, expanded polytetrafluoroethylene (hereinafter ePTFE), made by expansion by stretching at a temperature below the crystalline melt temperature of PTFE, has been known for some time. These porous, fibrillated materials and their manufacture were originally described by Gore in U. S. Pat. Nos. 3,953, 566 and 4, 187, 390. They possess the known attributes of PTFE while adding additional benefits resulting from their porous microstructure. They are typically hydrophobic, inert, water resistant, strong, and can be made to be thin and flexible. Applications for these materials include, for example, wire insulation, gaskets, and waterproof and breathable rainwear.

The mechanical properties of these materials have been the focus of much research and many inventions. The use of elongation at high rates and elevated temperatures to increase the tensile strength of PTFE was first taught by Gore in U. S. Pat. No. 3,953, 566.

The creep resistance of ePTFE has been shown to increase by densification at high temperatures under vacuum by Knox, et al. in U. S. Patent No. 5,374, 473. Densification of at least two layers of ePTFE was performed under vacuum at temperatures from 330°C to 390°C and under pressures from 150 psi to 350 psi.

Likewise, creep resistant articles of ePTFE such as gaskets, O-rings, and valve seats have been produced under similar extreme process conditions. Fuhr, et. al. , in U. S. Patent No. 5,792, 525, teach that densification of ePTFE in an autoclave at temperatures over 300°C for an hour or more will significantly reduce the creep of the resultant ePTFE articles. In addition, Fuhr et al. teaches that partial densification results in an ePTFE structure that has a dense surface skin and a non-densified core.

The cut resistance of ePTFE articles has also been improved by densification at high temperatures. U.S. Patent No. 4,732,629 teaches that densification and heating ePTFE wire-wrapping tapes to over 345°C for a period of time increases the cut resistance of the resultant cable shield by more than 50%.

Complimentary layers have been combined with ePTFE films to enhance specific performance attributes. The addition of a layer of hydrophilic polymer to the ePTFE film was first taught by Gore in U.S. Patent No. 4,194,041. This patent showed that the contamination resistance of waterproof, breathable articles, such as garments, could be enhanced by the addition of a layer of breathable polymer to an ePTFE film. It is also known to sandwich such a complimentary layer between two or more layers of ePTFE film, or to provide a complimentary layer to both sides of the ePTFE film.

It is further known to form ePTFE containing laminates, which include at least one layer of ePTFE film adhered directly to at least one textile material. Moreover, the ePTFE film can contain the above mentioned layer of hydrophilic polymer, if desired. In such an embodiment, the hydrophilic polymer layer can serve to adhere together the ePTFE film and the textile material, or a suitable adhesive material can be supplied to adhere the hydrophilic polymer and ePTFE combination to the textile material. Moreover, in the case where a hydrophilic polymer layer is not provided, an adhesive material can be supplied to adhere the ePTFE film to the textile material. Any suitable adhesive can be used. The adhesive can be supplied in a discontinuous pattern (e.g., as a discreet dot pattern, as lines of adhesive, etc.), as a substantially continuous layer (e.g., substantially covering the surface of the ePTFE), in which case the adhesive should be capable of allowing water vapor to pass through (i.e. be breathable, such as the hydrophilic polymers mentioned above, and particularly hydrophilic layers of polyurethane), or the adhesive can be supplied as a continuous pattern, such as the grid pattern disclosed in US Patent No. 5,660,918, to Dutta.

All of the above teachings have lead to the development of ePTFE films and laminates which are ideally suited for protective clothing articles used for wear in wet conditions (such as rain, snow, etc.); in outdoor activities (such as skiing, biking, hiking, etc.); in handling hazardous chemicals, in preventing contamination, in avoiding infection, articles should in each instance protect the wearer by preventing leakage of water or other fluids and microorganisms into the article while keeping the wearer comfortable by allowing perspiration to evaporate from the wearer to the outside of the article. In addition, such articles are intended to be reusable. That is, it should maintain the functional attributes of protection and comfort during ordinary use including automatic machine washing.

The microporous structure of ePTFE make these films inherently white in color. For certain garment and other applications, this white color can be aesthetically displeasing and thus highly undesirable. U. S. Patent No. 3,953, 566 teaches that ePTFE film can be made transparent if heat treated at 350°C for 8 minutes and then compressed under 1500 psi for several minutes. This means of creating a non-white ePTFE microstructure fails to meet the needs for breathable constructions because the process used to create the transparency simultaneously results in a fully densified, non-porous film.

Alternatively, colored fillers have been used to uniformly change the inherent white color of ePTFE. U. S. Patent No. 4,985, 296, teaches the use of fillers such as carbon black to create homogenous ePTFE films of colors other than white.

Unfortunately, the fact that all ePTFE film containing laminates to date have a uniform, single color appearance forces the garment manufacturers to hide the white ePTFE film either by including a third textile layer on the inside surface of the garment, or by using a three-layer laminate wherein the ePTFE film is sandwiched between two textile layers. Thus, a need exists for an ePTFE containing laminate that is not a single homogenous color but rather provides an aesthetically pleasing, patterned appearance.

## SUMMARY OF THE INVENTION

According to an aspect of the present invention there is provided a method of selectively compressing a polymer film or textile laminate in accordance with Claim 1.

The laminate may comprise at least one layer of textile material having a first side and a second side and polymer film, having a first side and a second side, adhered to at least one of the first and second sides of the textile material, wherein the polymer film has at least two regions of differing translucency.

The at least two regions of differing translucency can be obtained by a process where regions of the polymer film are selectively compressed, and other regions are not compressed. Such a process can comprise compressing a polymer film or a polymer film/textile laminate between two hardened surfaces, which may contain a pattern that is to be imparted into the polymer film. The two surfaces are brought together with sufficient pressure to effectively compress only the portions of the polymer film where the pattern is raised while concurrently retaining non-compressed portions where the pattern is not raised. Heat can optionally be applied to effect the contrast between the compressed and non-compressed portions of the desired pattern. Patterns can be created by using hardened surfaces comprising multiple levels to which the raised surface is raised. Each different raised level can create a correspondingly different amount of compression (and, thus, degree of translucency) of the polymer film. As the polymer film is compressed, it becomes more translucent, as compared to the non-compressed (or less compressed) portion of the film. The degree of translucency increases with increasing level of compression. Therefore, selective compression accomplished through the use of patterned raised surfaces can create aesthetically enhanced polymer films and polymer film/textile laminates. Due to the optical change (i.e., increased translucency) of the polymer film upon compression, the image of the patterned surface can be transferred to the polymer film or polymer film/textile laminate.

According other aspects of the present invention there are provided a garment, e.g. shirts, pants, gloves, shoes, hats, and jackets, a sleeping bag, or a tent according to the appended claims.

## BRIEF DESCRIPTION OF THE FIGURES

Figure 1 is a schematic drawing of a process which does not form part of the invention;
Figure 2 is a schematic drawing of a process which does not form part of the invention;
Figure 3 is a schematic drawing of a process according to the invention;
Figure 4 is an optical micrograph of a laminate which does not form part of the invention;
Figure 5 is an optical micrograph of a laminate which does not form part of the invention;
Figure 6 is an optical micrograph of a laminate which does not form part of the invention;
Figure 7 is a combination of an optical micrograph and a corresponding grey-scale spectra showing the range of shades of grey in a laminate which does not form part of the invention;
Figure 8 is an optical micrograph of a laminate which does not form part of the invention;
Figure 9 is a combination of an optical micrograph and a corresponding grey-scale spectra showing the range of shades of grey in a laminate which does not form part of the invention;
Figure 10 is an SEM of a laminate which does not form part of the invention;
Figure 11 is a three-dimensional surface map depicting the various depths of a laminate which does not form part of the invention;
Figure 12 is a Zygo profilometer scan of the surface of a laminate which does not form part of the invention;
Figure 13 is an optical micrograph of a section of a prior art laminate that has been subjected to abrasion testing;
Figure 14 is an optical micrograph of a section of a laminate which does not form part of the invention that has been subjected to abrasion testing.
Figure 15 is an SEM of a laminate formed in Example 19.

## DETAILED DESCRIPTION OF THE INVENTION

Polymer film having at least two regions of differing translucency is provided.

Laminate comprising at least one layer of textile material having a first side and a second side and polymer film, having a first side and a second side, adhered to at least one of the first and second sides of the textile material, wherein the polymer film has at least two regions of differing translucency is also provided. In an aspect of the invention the polymer film comprises a multitude of regions differing in translucency. In a further aspect of the invention the regions of differing translucency comprise a substantially repeating pattern. In a further aspect of the invention, at least about 10% of the surface area of the polymer film is more translucent than the remaining surface area of the polymer film. In a still further aspect of the invention, at least about 25% of the surface area of the polymer film is more translucent than the remaining surface area of the polymer film. In yet a further aspect of the invention, at least about 50% of the surface area of the polymer film is more translucent than the remaining surface area of the polymer film.

As used herein "polymer film" includes any polymer structure whose optical properties (i.e. translucency) change upon compression. In an aspect of the invention "polymer film" can be a polymer film having at least some interconnected porosity. Examples of suitable polymer films include porous polytetrafluoroethylene films (and particularly porous, expanded polytetrafluoroethylene films ("ePTFE")), porous polyurethane films, porous polyolefin films, porous polyester films, and multi-colored polyurethane films. Although polymer films can be any polymer structure, as discussed above, for simplicity the remainder of the disclosure will exemplify an embodiment wherein the polymer film comprises porous, expanded polytetrafluoroethylene film.

Suitable textile materials may be woven or non-woven, employing synthetic fibers, natural fibers, or blends of synthetic and natural fibers. Textiles may also be knits, interlocks and brushed knits.

Laminate can be formed by the selective compression of an ePTFE film or of an ePTFE film/textile laminate which will result in, among other things, improved aesthetics while other attractive properties (such as breathability) are not significantly affected. A selectively compressed ePTFE film and/or ePTFE film/textile laminate can be produced by a number of suitable methods. ePTFE film/textile laminates provide a useful material for many applications where water vapor permeability (i.e., breathability) is required while providing some degree of water resistance or even water proofness.

Laminates comprising ePTFE film and textile can be produced by any suitable method. Such methods are known in the art and include those as described in, for example, U.S. Patent No. 5,289,644 to Driskill et al. For example such laminates can be produced by printing an adhesive onto one layer in a discontinuous pattern, in an intersecting grid pattern, in the form of continuous lines of adhesive, as a thin continuous layer, etc., and then introducing the second layer in a way that the adhesive effectively joins and adheres together the two adjacent surfaces of the ePTFE film and the textile material. A 3 layer laminate can similarly be produced by printing adhesive onto both sides of an ePTFE film and then introducing both a first and second textile to opposing surface of the ePTFE film onto which the adhesive has been printed. Alternately, a 2 layer laminate can be produced first and then an adhesive printed or otherwise provided onto the ePTFE side of the 2 layer laminate prior to the introduction of a second textile layer onto said second ePTFE surface.

The at least two regions of differing translucency can be obtained by a process where regions of the polymer film are selectively compressed, and other regions are not compressed. Such a process can comprise compressing a polymer film or a polymer film/textile laminate between two hardened surfaces, at least one of which may contain a pattern that is to be imparted into the polymer film. The two surfaces are brought together with sufficient pressure to effectively compress only the portions of the polymer film where the pattern is raised while concurrently retaining non-compressed portions where the pattern is not raised. Heat can optionally be applied to effect the contrast between the compressed and non-compressed portions of the desired pattern. Patterns can be created by using at least one hardened surface comprising multiple levels to which the raised surface is raised. Each different raised level can create a correspondingly different amount of compression of the polymer film. As the polymer film is compressed, it becomes more translucent, as compared to the non-compressed (or less compressed) portion of the film. The degree of translucency increases with increasing level of compression. Therefore, selective compression accomplished through the use of patterned raised surfaces can create aesthetically enhanced polymer films and polymer film/textile laminates. Due to the optical change (i.e., increased translucency) of the polymer film upon compression, the image of the patterned surface can be transferred to the polymer film or polymer film/textile laminate.

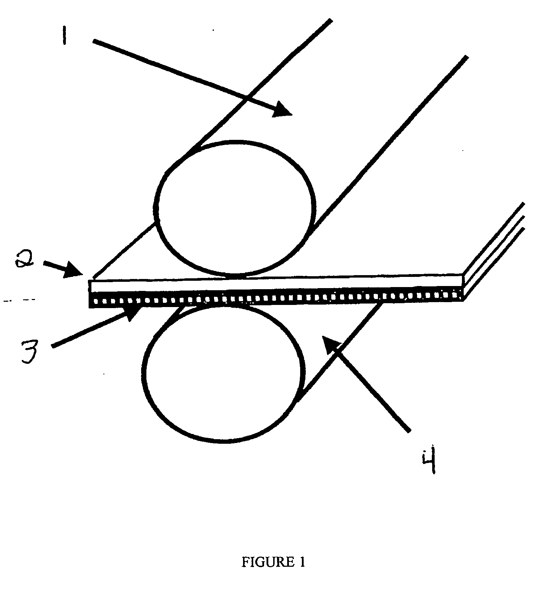

Turning to the Figures, Figure 1 is a schematic of a process by which selective compression of an ePTFE film/textile laminate can be accomplished. As shown in Figure 1, an ePTFE film 2 has been laminated to textile material 3. The laminate can be calendered between two smooth hard rolls 1 and 4 under pressures, temperatures, and speeds so that the raised yarns of the textile are sufficient to locally compress the ePTFE microstructure ; thereby creating a selectively compressed ePTFE film/textile laminate. In both woven and knitted textiles, the plies of the yarns can be alternated one over the other. One yarn can be raised and then descend under the other yarn as the textile is intertwined together which creates surface topography. As the ePTFE laminate is subjected to pressure (and heat when used), such as when compressed between the two smooth rolls, the raised cross-overs of the yarns create high pressure spots that result in selective compression of the ePTFE microstructure, which results in the compressed regions of the film being more translucent than the non-compressed regions of the film. Furthermore, the pattern of selective compression in this case will match that of the textile used to create the high pressure points.

A 3 roll lab calendering system, from B. F Perkins of Rochester, N. Y. is an example of a suitable calendering system which can be used for such a method. The machine has a 56 mm (22") wide face and can be run at between about 3 metres per min (10 feet per minute) and about 4.5 metres per min (15 feet per minute) in most cases. However, the speed with which ePTFE film/textile laminate can be passed through the nip of the smooth rolls can be altered greatly, depending on desired results. For example, higher line speeds will reduce the residence time under the pressure of the nip and accordingly will, generally, tend to produce less selective compression. Moreover, the temperature of the rolls can be adjusted to affect the degree of selective compression. Particularly suitable roll temperatures may be between about 80°C and about 160°C. However, a selective compression image can be created at both lower and higher temperatures. The nip pressure between the two smooth rolls can be varied, with pressures between about 4464kg/m (250 pounds per linear inch) and about 107 tonnes/m (6,000 pounds per linear inch) being particularly suitable. At low pressures, the intensity of the selectively compressed image may be lower. As the nip pressure is increased, the resultant selectively compressed image may become sharper up to a point, beyond which, the image may become more diffuse.

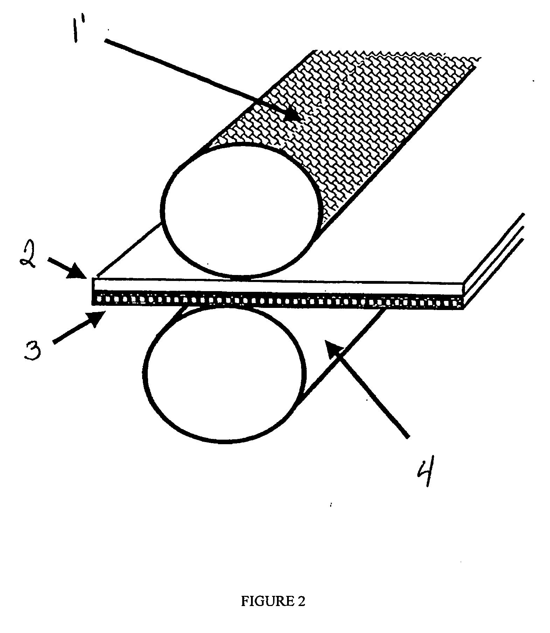

A second method for the selective compression of ePTFE film or ePTFE film/textile laminates is through the use of a pattern roll. A schematic of this process configuration is depicted in Figure 2. In such a method, a pattern of high and low areas is created on an otherwise smooth roll. Typically, a hardened metal roll is engraved with the desired pattern 1'. This patterned roll 1' can then be matched with smooth, hard roll 4. The smooth roll 4 is typically comprised of hard rubber, plastic, or a filled fiber such as a filled cotton. A filled cotton roll is comprised of cotton fibers with an optional binder which are compressed to form a hard, packed solid material. This material can then be machined smooth to produce a suitable surface for smooth calendering. This pair of rolls can then be mounted in a machine so that a nip is formed between the rolls as depicted by the gap between 1' and 4 in Figure 2. The desired ePTFE film (or ePTFE film 2/textile 3 laminate) can then be fed through the nip that is formed between the patterned roll 1' and the smooth roll 4. As the ePTFE film (or ePTFE film 2/textile 3 laminate) passes through the closed nip, the pattern can selectively compress the ePTFE microstructure where the pattern surfaces are raised. This results in the compressed regions being more translucent than the non-compressed regions.

Suitable process roll temperatures can be between about 149°C (300°F) and about 204°C (400°F), although both higher and lower temperatures can also produce selectively compressed ePTFE microstructures. The nip pressure can be varied depending on the desired degree of compression. Nip pressures of between about 179kg/m and 36 tonnes/m (about 10 and about 2000 pounds per linear inch ("pli")) are believed to be particularly acceptable. In an aspect of the invention nip pressures of between about 1.7 tonnes/m and 17 tonnes/m (about 100 pli and about 1000 pli) may be acceptable. In a further aspect of the invention nip pressures of between about 3.8 tonnes/m and about 14 tonnes/m (about 200 pli and about 800 pli) may be acceptable. The gap between the two compression rolls should be set to impart the desired nip pressure. Likewise, the line speed controls the residence time in the nip. Thus, slower line speeds will enable the ePTFE article to be subjected to the nip environment for a longer time as compared to when higher line speeds are used. In an aspect of the invention a line speed of between 0.9m/min (1 yard per minute

("ypm")) and 46 metres/m (50 ypm) can be used. In a further aspect of the invention, a line speed of between 4.6 m/min and 27 m/min (5 ypm and 30 ypm) can be used. In a still further aspect of the invention a line speed of between 9 m/min and 18 m/min (10 ypm and 20 ypm) can be used.

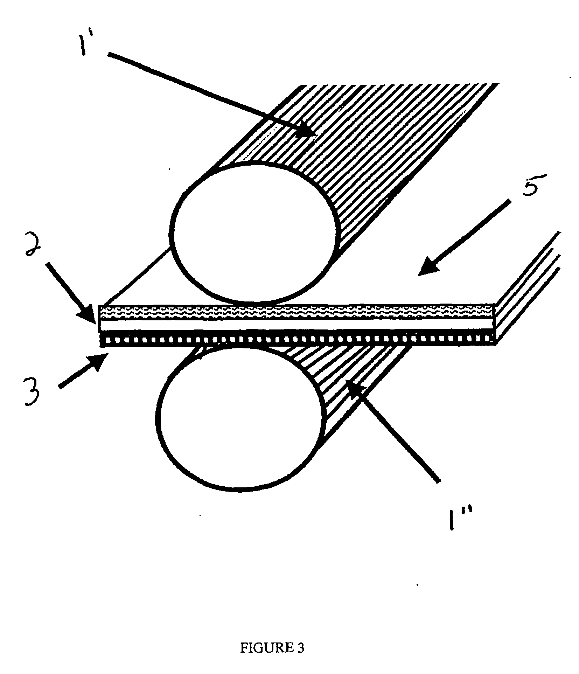

A third process for the selective compression of ePTFE film or ePTFE film/textile laminate is through the use of two pattern rolls as depicted in Figure 3. In this process, the high and low portions of each pattern roll 1' and 1' are synchronized so that the two rolls effectively mate with each revolution. This male/female set creates an enhanced, selective compression pattern. The intensity of the pattern can be adjusted based on the tolerances between the two mating parts. The extent of selective compression imparted to the ePTFE film or ePTFE film/textile laminate depends in part on the gap between the two mating rolls, the temperature and pressure of the rolls, as well as the speed with which the article passes through the nip. As shown in Figure 3, while this process can be used on ePTFE film alone or on a 2 layer ePTFE film 2/textile 3 laminate, the process can also be used on 3 layer laminate of textile 3/ePTFE film 2/textile 5, as shown in the Figure.

A fourth process for the creation of selectively compressed ePTFE film or ePTFE film/textile laminates is through the selective compression of an ePTFE film followed by lamination of the selectively compressed ePTFE to at least one textile material. In this process, an ePTFE film can be compressed between either a patterned surface and a smooth surface or between two patterned surfaces, as described above. If two patterned surfaces are used, these two surfaces do not need to be the same. In practice, this compression can be produced by passing the ePTFE film between the nip which is formed between either one patterned roll and one smooth roll or comprised of two pattern rolls.

Irrespective of the process used, it is also possible to add further materials to the selectively compressed polymer film or polymer film/textile laminate. For example, it may be desirable to provide various colors to a surface of the film or laminate. This can be achieved by, for example, providing colored materials (such as colored polymers or pigments, colored polymer films, etc.) in contact with a surface of the film or laminate prior to selective compression. Upon completion of selective compression, the desired colored material can be selectively visible through the compressed film regions.

Other suitable processes for selectively compressing polymer film or polymer film/textile laminates will now be readily apparent to the skilled artisan. The resultant material is not only aesthetically pleasing, but has other surprising, improved properties, as compared to a non-compressed polymer film or polymer film/textile laminate. For example, selectively compressed ePTFE film/textile laminate will remain breathable and will also compact better than a similar, but non-compressed laminate. Furthermore, selectively compressed ePTFE film/textile laminate will result in an ePTFE film layer that resists scratching, as compared to a similar, but non-compressed laminate. Moreover, selectively compressed ePTFE film/textile laminate has better (i.e. softer) "hand" (as described herein), than a similar, but non-compressed laminate.

The selectively compressed polymer film/textile laminates will have many useful applications as the skilled artisan will now understand. Exemplary articles that can be produced using the laminates include, for example, garments such as shirts, pants, gloves, shoes, jackets, vests, hats, etc. Further articles include, for example, tents, sleeping bags, etc. Such articles can be produced so that the polymer film faces outward and is the outer surface of the article. Moreover, such articles can be produced so that the polymer film faces inward (such as the inside surface of a garment) and is the inner surface of the article, thus obviating the need for an inner textile layer. Moreover, garments can be engineered to be fully reversible, so that the polymer film can face either outward or inward.

## DEFINITIONS

"Breathable" refers to polymer film/textile laminates that have a Moisture Vapor Transmission Rate (MVTR) of at least about 1,000 (grams/($m^2$)(24 hours)).

"Selective compression" refers to any process by which a region of the polymer film is compressed relative to a second region within the same specimen, resulting in the compressed region being more translucent than the non-compressed region. Thus, a selectively compressed polymer film will have at least two regions of differing translucency.

"Laminate" refers to any layered composite that comprises at least one polymer layer and at least one textile layer, the layers of which are, typically, adhered together.

By "Adhered" or "Adhered together" it is meant that the polymer material (e.g., ePTFE film) and textile material are joined together by suitable bonding media. The bonding media can be adhesive dots, adhesive applied as a continuous grid pattern, adhesive applied as continuous lines, a continuous, breathable adhesive layer, a fusion bonded interface, or any other material which provides for adhesion between the textile layer and the polymer layer. In an aspect of the invention at least one layer of material (typically hydrophilic polymer) can be provided between the polymer film and the textile material. For example, a thin layer of hydrophilic polyurethane can be provided to the surface of an ePTFE film before the film is adhered to a textile material.

Suitable adhesive can then be applied to the breathable polyurethane layer and then joined to the textile material. According to the invention the ePTFE film and the textile are considered adhered together even though at least one layer of material (such as hydrophilic polymer) is provided between them, in addition to the adhesive. In a further aspect of the invention the at least one layer of material can act as both a hydrophilic layer and as the adhesive material, thus obviating the need for applying another layer of adhesive material. Further variations will be apparent to the skilled artisan.

"Waterproof" is determined by conducting waterproof testing as follows: Laminates are tested for waterproofness by using a modified Suter test apparatus, which is a low water entry pressure challenge. Water is forced against a sample area of about 108mm (4 1/4 inch) diameter sealed by two rubber gaskets in a clamped arrangement. The sample is open to atmospheric conditions and is visible to the operator. The water pressure on the sample is increased to about 6.8kPa (1 psi) by a pump connected to a water reservoir, as indicated by an appropriate gauge and regulated by an in-line valve. The test sample is at an angle and the water is recirculated to assure water contact and not air against the sample's lower surface. The upper surface of the sample is visually observed for a period of 3 minutes for the appearance of any water which would be forced through the sample. Liquid water seen on the surface is interpreted as a leak. A passing (waterproof) grade is given for no liquid water visible within 3 minutes. Passing this test is the definition of "waterproof" as used herein.

## TEST METHODS

## COMPACTION

Compaction volume of a pattern selectively compressed ePTFE laminate and non-selectively compressed samples are tested using ASTM Designation F 1853-98, Standard Test Method for Measuring Sleeping Bag Packing volume.

The method quantifies and compares the packing volume of sleeping bags and like textile constructions under a standardized load. The standard cylinder used to test sleeping bags measures about 0.45m (18 inches) in diameter by about 0.8m (32 inches) high. However, for smaller test specimens, an about 0.14m (5.5 inch) diameter by about 0.8m (31 inch) high cylinder is used. The weight used to compress garment and laminate samples is about 11 kg (25 pounds). The test sequence requires placing the test specimen within the circular round cylinder, and allowing it to settle, and when stable a plate that is slightly undersized, but closely matches the inside diameter of the measuring cylinder is placed on top of the garment, and the 11 kg (25 pound) weight load is lowered into place on top of the plate. The material is compressed by the weight. The height of the compacted material within the cylinder is measured by a scale affixed to the measuring cylinder. Measurements are taken of the compressed material at two location opposite to one another to the nearest 1.5mm (1/16 inch). The material is then removed, the laminate shaken out and allowed to relax. After several minutes it is replaced within the cylinder, and the test repeated. The four resulting height measurements are then averaged to yield the garment compaction height.

## WEIGHT

Weight of samples are measured on a Mettler-Toledo Scale, Model 1060. The scale is recalibrated prior to weighing specimens. All weights are recorded in ounces to the nearest half ounce.

## HAND

AATCC (American Association of Textile Chemists and Colorist) Evaluation Procedure 5 is used to measure the effect of selective compression on the hand of ePTFE laminates by using a bending test. The equipment used is a Handle-O-Meter, Model 211-5-10 manufactured by Thwing/Albert Instrument Co. Philadelphia, PA. Ten test specimens of the desired material are cut to about 101 x 101mm (4 inch x about 4") squares. Five are cut in the fill direction. Five are cut in the warp direction. All specimens are then conditioned at 70 $\pm$ 2 °F, 65 $\pm$ 2% Relative Humidity (hereinafter"RH") for about 4 hours prior to testing. An about 1000 gram beam is used to push the test specimens though an about 6mm (1/4") slot. The resistance force, related to the bending stiffness of the fabric, is measured and displayed digitally. The peak force is recorded and used to compare samples. The samples are then averaged tested for hand using the Handle-O-Meter.

## MOISTURE VAPOR TRANSMISSION RATE TEST- (MVTR)

Samples are die-cut circles of 7.4 cm diameter. The samples are conditioned in a 23°C, 50% $\pm$2% RH test room for 4 hours prior to testing. Test cups are prepared by placing 15 ml of distilled water and 35 g of sodium chloride salt into a 130ml (4.5 ounce) polypropylene cup, having an inside diameter of 6.5 cm at the mouth. An expanded PTFE membrane (ePTFE), available from W. L. Gore and Associates, Incorporated, Elkton, Maryland, is heat sealed to the lip of the cup to create a taut, leakproof microporous barrier holding the salt solution in the cup. A similar ePTFE membrane is mounted taut within a 127mm (5 inch) embroidery hoop and floated upon the surface of a water bath in the test room. Both the water bath and the test room are temperature controlled at 23°C. The sample is laid upon the floating membrane, a salt cup is weighed, inverted and placed upon the sample. After one hour, the salt cup is removed, weighed, and the moisture vapor transmission rat is calculated from the weight pickup of the cup as follows:

$$\text{MVTR (grams/(m}^2\text{) (24 hours) ) = Weight (g) water pickup in cup/ [Area (m}^2\text{) of cup mouth multiplied by the Time (days) of test]}.$$

A combined moisture permeability is determined by one of two ways.

The preferred way is to place the two adherends physically in contract, without adhesive, between the two ePTFE membranes of the test, as taught above. In this manner the adherends are positioned such that the measurement is a direct determination of the moisture vapor transmission rate of the adherends in series.

There are certain situations where this configuration is not practical and as such the combined moisture permeability (used interchangeably with moisture vapor transmission rate herein, MVTR) can be mathematically determined from the previously independently determined moisture transmission rate of the two adherends. This is accomplished by equating the sum of the reciprocals of the adherend MVTRs to the reciprocal of the combined MVTR and solving for the combined MVTR.

**ABRASION**

The test used for abrasion is the Abrasion Resistance of Textile Fabrics Abrasion standard test method D. 4966-98 (Martindale Tester Method), by subjecting specimens to a rubbing motion against a piece of felt for 3,000 movements. The abraided samples are visually inspected for any change in aesthetics. Samples are preconditioned, then placed in a conditioned room at 21°C (70 °F ± 2° F) and 65 ± 2% RH for at least four hours prior to testing. A piece of felt measuring about 140mm (5.5 inches) square followed by a piece of the standard laminate of the same size is placed on the testing table. The machine mounting weight is placed on the table to flatten the felt/laminate samples. The felt/laminate is secured to the table with the mounting weight in place, then the weight is removed to inspect for tucks or ridges. The specimen is then placed face down into the specimen holder. The assembled holder is placed on the machine with a foam and wool abradent and the required weight is added to give pressure on each specimen. The amount of pressure is 9 kPa ± 0.2 kPa (1.31 ± 0.03 psi). The counter is set to record the desired movements, and the machine started. After 3,000 movements, visual examination is done.

**CURL**

Curl of desired fabric laminates is measured using Gore Test Method Fabla 00179. Test specimens are cut into about 127mm x 127mm (5 inch by 5 inch) squares. Three specimens are tested in the fill direction, and three in the warp direction. After cutting, specimens are taken into a conditioned lab, maintained at 21°C (70+2°F), and 65 ± 2% RH for about four hours. The specimens are observed to detect any curl. If some curl is present, each specimen is placed with the curled side up on a flat surface away from drafts or air from fans. If no curl is obvious, each specimen with the film side up is placed onto a flat surface away from drafts or air from fans. If no curl is obvious on the fabric side, the sample is placed fabric side up on a flat surface away from drafts or air from fans. Specimens are allowed to lay undisturbed for about four hours.

After the about four hour equilibration period, each specimen is visually inspected and given a score of from 0 to 5. The direction of curl, if present, is also recorded for both fill and warp specimens. A lower curl score indicates a sample that lies more flat. A curl score of 5 indicates a sample that will spontaneously roll up into a rod-like shape. A curl score of 0 indicates a sample that lies flat.

**GREY-SCALE**

The grey-scale of the micrographs of selectively compressed and of non-compressed control samples were analyzed via the following method.
Depending on the magnification required, the micrograph image was captured from either an optical microscope or a scanning electron microscope. The captured digital image was then converted to pixels. Image analysis software by EDAX was then used to create a frequency distribution of the grey-scale pixels.

**3-DIMENSIONAL SURFACE MAP**

A 3-dimensional surface map of selectively compressed laminate samples was created using a Zygo Optical Surface Profilometer. A ten times objective lens was used and unless otherwise stated, a 100 micro bipolar distance was scanned. The resulting 3-dimensional surface map was then saved as a bit map for subsequent inclusion in other files.
The following non-limiting examples are provided to further exemplify aspects of the invention.

**EXAMPLES**

**Example 1**

A 2 layer laminate comprised of a brushed knit and an ePTFE film from W. L. Gore & Associates, Inc., of Elkton, MD, part number KAEX0010000D was selectively compressed using the following process. A 3 roll lab calendering system, from B. F Perkins of Rochester, N. Y. was used. The machine, having an about 560mm (22") face, was run at a speed of about 3m/min to about 4.5m/min (10 to about 15 feet per minute), with floor mounted unwind and rewind, and a 2 zone fluid heating system. The rollers were heated to a temperature of about 116°C (240°F). A hardened metal leather patterned roll and a smooth, filled cotton mating roll were used. One sample of the laminate was run through with the ePTFE surface facing the patterned roll. A second sample of the laminate was run through with the fabric surface facing the patterned roll. In both cases, the image of the pattern was transferred onto the ePTFE film side of the 2 layer laminate. Both appearance and texture had been changed. The ePTFE surface had the appearance of the leather pattern of the roll.

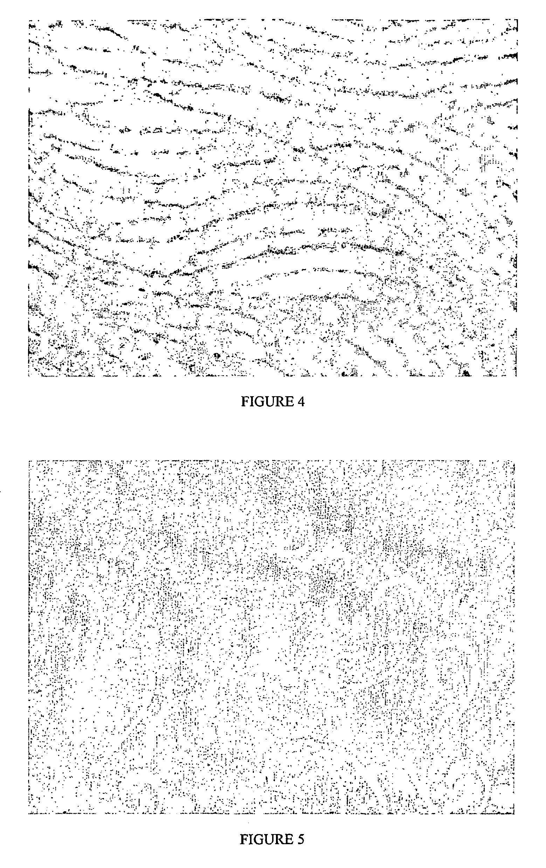

Figure 4 is an optical micrograph of the ePTFE side of the laminate, after selective compression. The selectively compressed regions of the ePTFE appear to be darker in color, but in fact are more translucent and show the color of the textile on the opposite side of the ePTFE. The non-compressed regions are clearly shown to be the known "white" color of non-compressed ePTFE.

## Example 2

A 2 layer laminate comprised of a brushed knit and an ePTFE film from W. L. Gore & Associates, Inc., of Elkton, MD, part number KAEX00100D was selectively compressed using the following process. A 2 roll production calendering system at Lee Fashion Fabrics, Inc. of Johnstown, N. Y. was used.
The machine, having an about 1.4m (56 inch) face, was run at a speed of about 9m/min (30 feet per minute). The rolls were heated to about 177°C (350°F). A hardened metal paisley patterned roll and a smooth, hard rubber roll were used. One sample of the laminate was run with the ePTFE surface facing the patterned roll. A second sample of the laminate was run with the fabric surface facing the patterned roll. In both cases, the image of the pattern was transferred onto the ePTFE film side of the laminate. Figure 5 is an optical micrograph of the ePTFE film side of the laminate. Both appearance and texture had been changed. The ePTFE surface had the appearance of the paisley pattern of the roll. As in Example 1, the selectively compressed regions of the ePTFE film appear to be darker, but in fact are more translucent and show the color of the textile material on the opposite side of the ePTFE. The non-compressed regions are clearly seen to be the known"white"color of ePTFE.

## Example 3

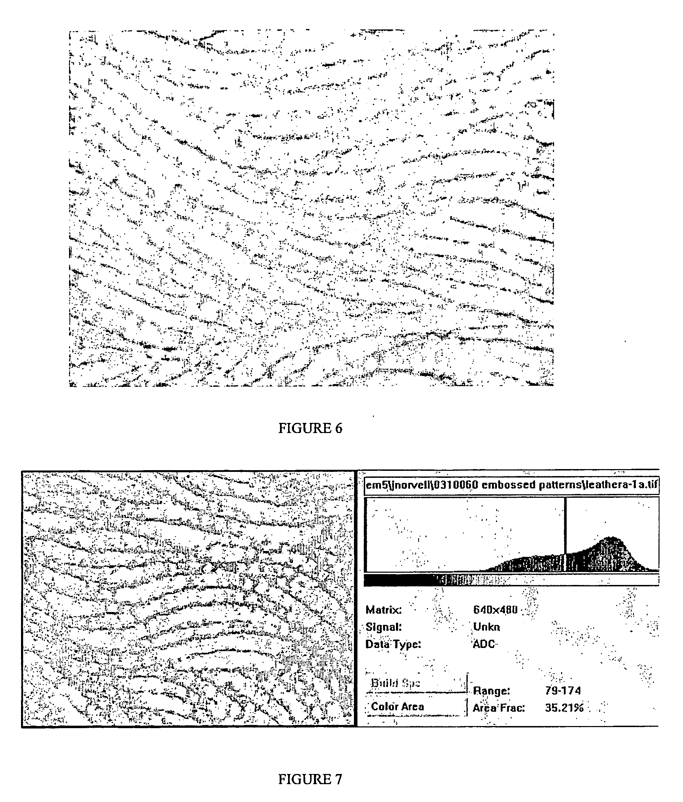

A 2 layer laminate comprised of a brushed knit and an ePTFE film from W. L. Gore & Associates, Inc., of Elkton, MD, part number KKRX620000 was selectively compressed using the following process. A 2 roll production calendering system at Lee Fashion Fabrics, Inc. of Johnstown, N. Y. was used. The machine, having an about 1.4m (56 inch) face, was run at a speed of about 9m/min (30 feet per minute). The rolls were heated to about 177°C (350°F). A hardened metal leather patterned roll and a smooth, hard rubber roll were used. One sample of the laminate was fed through with the ePTFE surface facing the patterned roll. A second sample of the laminate was fed through with the fabric surface facing the patterned roll. In both cases, the image of the pattern was transferred onto the ePTFE film side of the laminate, as depicted in the optical micrograph shown in Figure 6. Both appearance and texture had been changed. The ePTFE surface had the appearance of the leather pattern of the roll.
The various depths of the image on the patterned roll produced a surface image and pattern of varying degrees of translucency. Figure 7 is a grey-scale spectra that depicts the range of shades that were effectively imparted to the formerly white ePTFE film-side of the laminate.

## Example 4

A 2 layer laminate comprised of a knit and an ePTFE film from W. L. Gore & Associates, Inc., of Elkton, MD, part number KKRX620000 was selectively compressed using the process and machine described in Example 2.
The roller temperature was about 177°C (350°F). The machine was run at a speed of about 9m/min (30 feet per minute). A hardened metal, stripe-patterned roll and a smooth, hard rubber roll were used for this example. A sample of the laminate was fed with the ePTFE surface facing the patterned roll. A second sample of the laminate was fed with the fabric surface facing the patterned roll. The image of the stripe pattern was transferred onto the laminate. When the white ePTFE film side was facing the patterned roll, the image transferred to the film appeared crisp and sharp. When the knit faced the patterned roll, the image transferred to the ePTFE film and while still very clear, was slightly more diffuse and subtle.

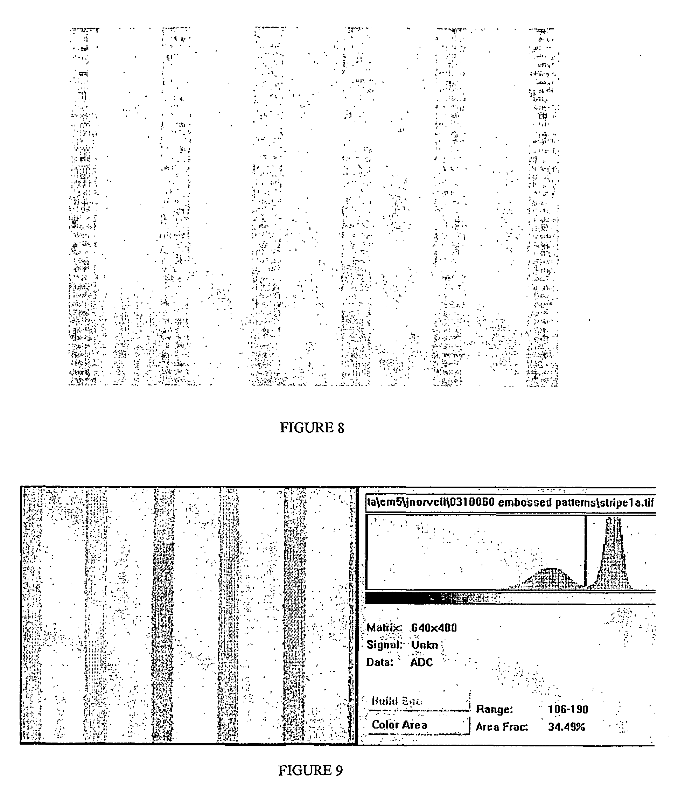

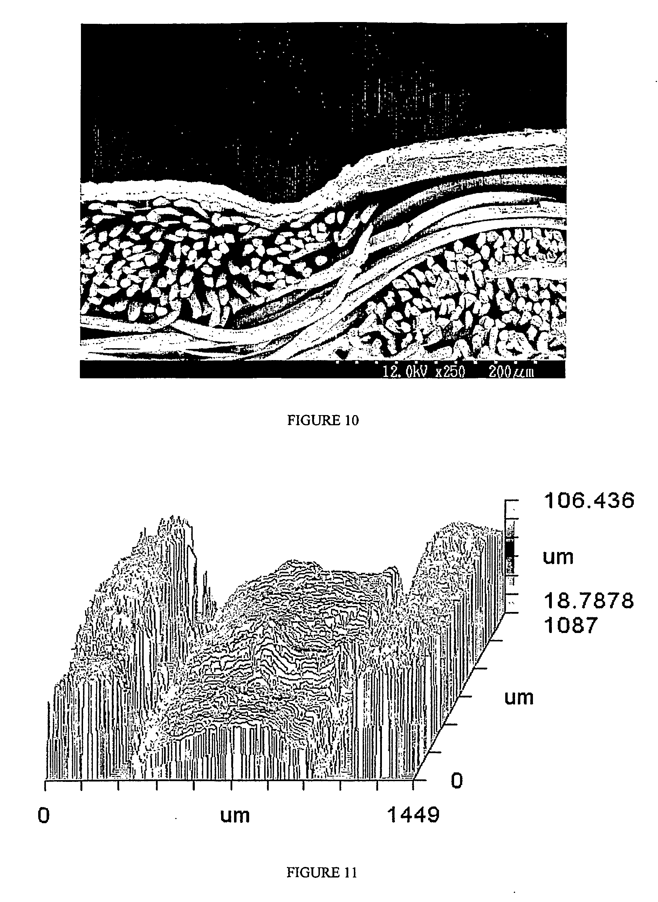

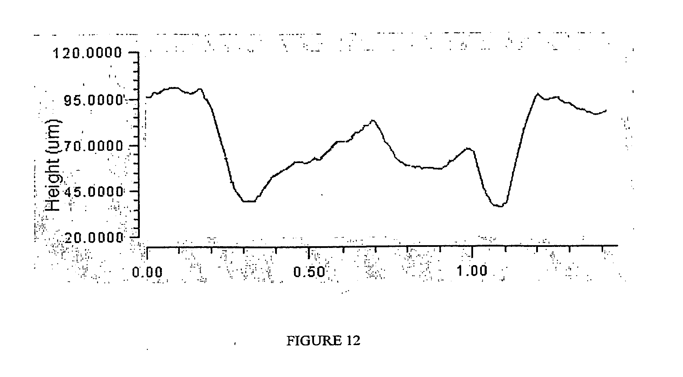

Figure 8 is an optical micrograph that shows the surface image created by the stripe pattern selective compression. Figure 9 shows the corresponding grey- scale frequency distribution highlighting the fact that the translucency varies with the degree of selective compression. Figure 10 shows an SEM cross- section micrograph of the transition between the compressed and non- compressed areas. Figure 11 shows a 3-dimensional surface map depicting the various depths of selective compression that resulted. Figure 12 shows a Zygo profilometer scan of the surface of a single stripe of this stripe patterned selectively compressed laminate sample.

## Example 5

A 2 layer laminate comprised of a knit and an ePTFE film from W. L. Gore & Associates, Inc., of Elkton, MD, part number KKRX62000 was selectively compressed using the process and machine described in Example 2.
The roller temperature was about 117°C (350°F). The machine was run at a speed of about 9m/min (30 feet per minute).

A hardened metal, snake skin-patterned roll and a smooth, hard rubber roll were used. One sample of the laminate was fed with the ePTFE surface facing the patterned roll. A second sample of the laminate was fed with the fabric surface facing the patterned roll. The image of the linen pattern was transferred onto the laminate. When the white ePTFE film side was facing the patterned roll, the image transferred to the film appeared crisp and sharp. When the knit faced the patterned roll, the image transferred to the ePTFE film and while still very clear, was slightly more diffuse and subtle.

## Example 6

A 2 layer laminate comprised of a knit and an ePTFE film which was coated with a breathable polyurethane layer from W. L. Gore and Associates, part number WNAX467000 was selectively compressed using the process described in Example 1, using the same roller temperature and line speed. A hardened metal, linen-patterned roll and a smooth, hard rubber roll were used.
One sample of the laminate was fed with the ePTFE surface facing the patterned roll. A second sample of the laminate was fed with the fabric surface facing the patterned roll. The image of the linen pattern was transferred onto the laminate. When the white ePTFE film side was facing the patterned roll, the image transferred to the film appeared crisp and sharp. When the knit faced the patterned roll, the image transferred to the ePTFE film and while still very clear, was slightly more diffuse and subtle.

## Example 7

A 2 layer laminate comprised of a brushed knit and an ePTFE film from W. L. Gore & Associates, Inc., of Elkton, MD, part number KAEX00100D was selectively compressed using the following process. A 3 roll lab calendering system, from B. F Perkins of Rochester, N. Y. was used. The machine, having a 560mm (22") face, was run at a speed of about 3m/min to about 4.5m/min (10 to about 15 feet per minute), with floor mounted unwind and rewind, and a 2 zone fluid heating system. A smooth, hardened metal roll and a smooth, filled cotton counter roll were used. One sample of the laminate was fed with the ePTFE surface facing the metal roll. A second sample of the laminate was fed with the fabric surface facing the metal roll. In both cases, the yarns of the knit material caused the ePTFE film to be selectively compressed so that the knit pattern was effectively transferred onto the ePTFE film of the laminate.

## Example 8

A 3 layer laminate comprised of a knit material on each side of a two layer ePTFE film construction, between which was sandwiched a breathable polyurethane layer, was selectively compressed. One side of the 3 layer laminate had a lighter weight knit than the opposite side (W. L. Gore and Associates, part number KPBX602607). The 3 layer laminate was selectively compressed using the process described in Example 2, using the same roller temperature and same line speed. A hardened metal, snake skin-patterned roll and a smooth, hard rubber roll were used. The laminate was fed through the rollers with the lighter-weight knit surface facing the patterned roll. The image of the snake-skin pattern was transferred onto the 3 layer laminate.

## Example 9: Compaction tests

Three selectively compressed laminate samples and their respective controls were tested for compaction using the test method described above.
Sample 1 was a three layer ePTFE containing laminate (Gore Part #NAX002604A). The control for Sample 1 was a non-compressed laminate of this material. Sample 1 was produced by taking a sample of this laminate and selectively compressing the laminate as described in Example 2, using a snake skin patterned roll. Sample 2 was a two layer ePTFE containing laminate (Gore Part #WKPX003000). The control for Sample 2 was a non-compressed laminate of this material. Sample 2 was produced by taking a sample of this laminate and selectively compressing the laminate as described in Example 2.
Sample 3 was a three layer ePTFE containing laminate (Gore Part # KPBX602607). The control for Sample 3 was a non-compressed laminate of this material. Sample 3 was produced by taking a sample of this laminate and selectively compressing the laminate as described in Example 2.
Each laminate was then cut to a size of about 1.8m (72 inches) by about 1.3m (52 inches) to produce samples for compaction testing. Each laminate sample was lowered into the test cylinder, allowed to settle for about 1 minute. When stable, weights measuring about 11 kg (25 pounds) were lowered on top of the plate. The test specimen was compressed by the weight. The height of the compacted test specimen within the cylinder was measured by a scale affixed to the measuring cylinder. Measurements of the height of the compressed test were taken at two locations opposite to one another, with height measurements being to the nearest 1.5mm (1/16 inch). As discussed above, the test was repeated for each sample and the measurements averaged to yield the reported Compacted Height.

**Table 1**

| Sample | Selective Compression Process | Control Sample Compacted) Height (inches) | Selectively Compressed Sample Compacted Height (inches |
|---|---|---|---|
| Sample 1 | Compressed as described in Example 2 | 2.75 | 2.50 |
| Sample 2 | Compressed as described in Example 2 | 3.00 | 2.63 |
| Sample 3 | Compressed as described in Example 2 | 3.13 | 2.75 |

### Example 10-Hand

Following the procedure described in Example 2 above, a 3 layer ePTFE laminate (Gore Part #WNAX002604A) was selectively compressed. The hand of this test specimen was compared to the control laminate (non-compressed Gore Part # WNAX002604A). A lower hand score indicates a softer sample.
The control laminate registered a hand of 194 and the selectively compressed laminate registered a hand of 134.

### Example 11-Curl

Following the procedure described in Example 2 above, a lightweight 2 layer ePTFE laminate (Gore Part # ASND 152000P3) was selectively compressed. The curl of this test specimen was compared to the control (non- compressed Gore Part #ASND 152000P3) laminate. The control laminate was judged to have a curl value of 0 and the selectively compressed laminate was judged to have a curl value of 4.

### Example 12 - Breathabilty and waterproofness results

Six laminate materials were selectively compressed as described in Example 2. The selectively compressed laminates and control laminates (the same laminate, but not selectively compressed) were tested for Water Vapor Transmission Rate (i.e. breathability) using the test method described above. Each laminate sample was tested before and after selective densification. Moreover, each selectively compressed laminate was tested for waterproofness. The results are shown in Table 2.

Table 2

| Sample | Pattern used to impart selective compression | Control MVTR (g/ $(m^2)$ (24 hours)) | Selectively Compressed MVTR $(g/(m^2)(24 hours))$ | Waterproof Testing Results |
|---|---|---|---|---|
| 2 Layer ePTFE laminate Gore part # KKRX620000 | Leather | 13,859 | 12,029 | Pass |
| 2 Layer ePTFE laminate Gore part # KKRX620000 | Stripe | 13,859 | 12,533 | Pass |
| 2 Layer ePTFE laminate. Gore part # WNOX117000 | Snake-skin | 14,604 | 12,278 | Pass |
| 3 Layer ePTFE laminate. Gore part # KPBX602607 | Snake-skin | 8,303 | 7,840 | Pass |

(continued)

| Sample | Pattern used to impart selective compression | Control MVTR (g/ (m$^2$) (24 hours)) | Selectively Compressed MVTR (g/(m$^2$)(24 hours)) | Waterproof Testing Results |
|---|---|---|---|---|
| 3 Layer ePTFE laminate. Gore part # WANX002604A | Snake-skin | 7,406 | 6,058 | Pass |
| WINDSTOPPER® brushed knit laminate. Gore part #KAEX00100D | Paisley | 19,241 | 16,178 | Pass |

**Example 13 - Abrasion results**

A first sample of a two layer ePTFE containing laminate (Gore Part #KAEX00100D) was selectively compressed as described in Example 2, using a paisley patterned roll. A second sample of the same laminate was not selectively compressed. Each sample was then subjected to the Abrasion test described above (i.e. Abrasion Resistance of Textile Fabrics Abrasion standard test method D. 4966-98 (Martindale Tester Method)), with the ePTFE side of each sample being subjected to abrasion.

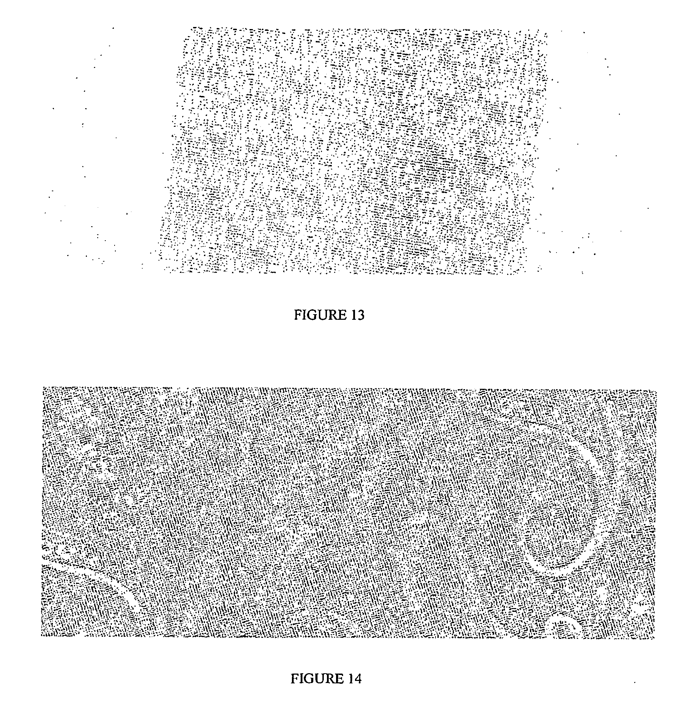

Optical micrographs of a section of each sample were then taken. Figure 13 is an optical micrograph of a section of the sample that was not selectively compressed. The Figure clearly shows the stark contrast between a portion of the sample that was subjected to the abrasion testing (i.e. the darker portion of the sample) and a portion of the sample that was not subjected to abrasion testing (i.e. the lighter portion of the sample). Figure 14 is an optical micrograph of a section of the sample that was selectively compressed. As can be seen, the paisley pattern of the sample is still present. Although there is still a contrast between the portion of the sample that was subjected to the abrasion testing and the portion of the sample that was not subjected to the abrasion testing, the contrast is not as stark as in the non-selectively compressed sample.

**Example 14**

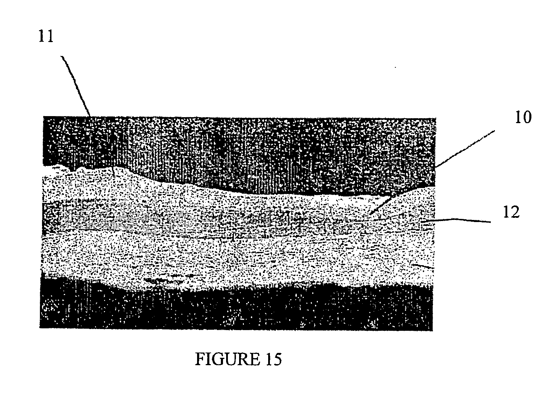

A three layer composite was produced from two ePTFE films and a colored polyurethane film as follows. The colored, 1 mil monolithic polyurethane film was from Deerfield urethanes, Deerfield, MA. In this example, the layers were stacked such that one ePTFE layer was on the bottom, the colored polyurethane film in the center, and the other ePTFE membrane on the top. This stack of films was fusion bonded together using a standard carver press-type apparatus for one minute at 150°C. A silicone foam pad was used on the lower platen to accommodate any pressure variance due to misalignment of the platens. Next, a pattern was created on this three layer composite film using a flat metal die in the shape of a butterfly. The flat metal die was placed beneath the composite three layer film and then the heat press closed for one minute at 150°C. The result was that the image of the metal tool was embossed into the three layer composite. The resulting film exhibited the patterned image of the butterfly-shaped embossing tool in the densified areas of both ePTFE surfaces. As shown in Figure 15, selectively densified ePTFE areas 10 were created where the embossing tool exerted higher pressure on the film. The color of the underlying colored polyurethane film 12 was visible in these selectively densified areas. Conversely, the relatively undensified areas 11 did not allow the color of the colored film 12 to show through the otherwise white surface of the undensified ePTFE film. By varying the number and colors of films used in conjunction with the ePTFe membrane or membrane, a broad range of performance and aesthetic effects can be provided by this invention. Moreover, it is possible to laminate the film according to this example to textiles to form a laminate material.

**Claims**

1. A method for selectively compressing a polymer film/textile laminate comprising:

providing a first patterned roll having high and low portions;
providing a second patterned roll having high and low portions;
arranging the first patterned roll and the second patterned roll to form a nip therebetween and the high portions of the first and second patterned roll and the low portions of the first patterned roll and the second patterned roll mate when the rolls are rotated; and
passing the polymer film/textile laminate through the nip to selectively compress the polymer film/textile laminate and to provide the polymer film with at least two regions of differing translucency.

2. The method of claim 1, wherein the polymer film comprises at least some interconnected porosity.

3. The method of claim 1 or 2, wherein the polymer film comprises a material selected from the group consisting of polytetrafluoroethylene, polyester, polyurethane, and polyolefin.

4. The method of claim 3, wherein the polytetrafluoroethylene comprises expanded polytetraflouroethylene.

5. The method of claim 4, wherein the polymer film/textile laminate further comprises polyurethane applied to at least one side of the expanded polytetrafluoroethylene film.

6. The method of any preceding claim, wherein the polymer film/textile laminate is waterproof.

7. The method of claim 6, wherein the polymer film/textile laminate is breathable.

8. The method of any preceding claim, wherein the polymer film has a first side adhered to a first layer of textile material and a second side adhered to a second layer of textile material.

9. The method of any preceding claim, wherein the first patterned roll and the second patterned roll are heated to a temperature of between about 140°C and about 204°C while passing the polymer film/textile laminate therebetween.

10. The method of any preceding claim, wherein the polymer film/textile laminate is compressed between the high portions of the first and second patterned roll, and the polymer film/textile laminate is not compressed between the low portions of the first patterned roll and the second patterned roll.

11. A garment produced using a laminate formed by the method of claim 1.

12. The garment of claim 11, wherein the garment is selected from the group consisting of shirts, pants, gloves, shoes, hats, and jackets.

13. A sleeping bag produced using a laminate formed by the method of claim 1.

14. A tent produced using a laminate formed by the method of claim 1.

**Patentansprüche**

1. Verfahren zum selektiven Komprimieren eines Polymerfolien-/Textillaminats, umfassend:

   das Bereitstellen einer ersten bemusterten Walze, die hohe und niedrige Teile aufweist;
   das Bereitstellen einer zweiten bemusterten Walze, die hohe und niedrigste Teile aufweist;
   das Anordnen der ersten bemusterten Walze und der zweiten bemusterten Walze unter Bildung eines Walzenspalts dazwischen und die hohen Teile der ersten und zweiten bemusterten Walzen und die niedrigen Teile der ersten bemusterten Walze und der zweiten bemusterten Walze aufeinander passen, wenn die Walzen rotiert werden; und
   das Hindurchführen des Polymerfolien-/Textillaminats durch den Walzenspalt, um das Polymerfolien-/Textillaminat selektiv zu komprimieren und die Polymerfolie mit mindestens zwei Bereichen verschiedener Transparenz zu versehen.

2. Verfahren nach Anspruch 1, wobei die Polymerfolie mindestens etwas vernetzte Porosität umfasst.

3. Verfahren nach Anspruch 1 oder 2, wobei die Polymerfolie ein Material umfasst, das aus der Gruppe ausgewählt ist bestehend aus Polytetrafluorethylen, Polyester, Polyurethan und Polyolefin.

4. Verfahren nach Anspruch 3, wobei das Polytetrafluorethylen expandiertes Polytetrafluorethylen umfasst.

**5.** Verfahren nach Anspruch 4, wobei das Polymerfolien-/Textillaminat des Weiteren Polyurethan umfasst, das auf mindestens eine Seite der expandierten Polytetrafluorethylenfolie aufgebracht ist.

**6.** Verfahren nach einem der vorhergehenden Ansprüche, wobei das Polymerfolien-/Textillaminat wasserdicht ist.

**7.** Verfahren nach Anspruch 6, wobei das Polymerfolien-/Textillaminat atmungsfähig ist.

**8.** Verfahren nach einem der vorhergehenden Ansprüche, wobei bei der Polymerfolie eine erste Seite an einer ersten Schicht Textilmaterial befestigt ist und eine zweite Seite an einer zweiten Schicht Textilmaterial befestigt ist.

**9.** Verfahren nach einem der vorhergehenden Ansprüche, wobei die erste bemusterte Walze und die zweite bemusterte Walze auf eine Temperatur zwischen etwa 140 °C und etwa 204 °C erhitzt werden, während das Polymerfolien-/Textillaminat dazwischen hindurchgeführt wird.

**10.** Verfahren nach einem der vorhergehenden Ansprüche, wobei das Polymerfolien-/Textillaminat zwischen den hohen Teilen der ersten und zweiten bemusterten Walzen komprimiert wird und das Polymerfolien-/Textillaminat zwischen niedrigen Teilen der ersten bemusterten Walze und der zweiten bemusterten Walze nicht komprimiert wird.

**11.** Kleidungsstück, das unter Anwendung eines Laminats hergestellt wird, das durch das Verfahren nach Anspruch 1 gebildet wird.

**12.** Kleidungsstück nach Anspruch 11, wobei das Kleidungsstück aus der Gruppe ausgewählt ist bestehend aus Hemden, Hosen, Handschuhen, Schuhen, Hüten und Jacken.

**13.** Schlafsack, der unter Anwendung eines Laminats hergestellt wird, das durch das Verfahren nach Anspruch 1 gebildet wird.

**14.** Zelt, das unter Anwendung eines Laminats hergestellt wird, das durch das Verfahren nach Anspruch 1 gebildet wird.

**Revendications**

**1.** Procédé de compression de manière sélective d'un stratifié de film polymère/textile comprenant:

la proposition d'un premier cylindre à motifs ayant des parties hautes et basses;
la proposition d'un second cylindre à motifs ayant des parties hautes et basses;
la disposition du premier cylindre à motifs et du second cylindre à motifs pour former un espace de pincement entre les deux et les parties hautes du premier et du second cylindres à motifs et les parties basses du premier cylindre à motifs et du second cylindre à motifs correspondent lorsque les cylindres sont mis en rotation; et
le passage du stratifié de film polymère/textile à travers l'espace pinceur pour comprimer de manière sélective le stratifié de film polymère/textile et pour fournir au film polymère au moins deux régions de translucidité différente.

**2.** Procédé selon la revendication 1, dans lequel le film polymère comprend au moins une certaine porosité interconnectée.

**3.** Procédé selon la revendication 1 ou 2, dans lequel le film polymère comprend un matériau sélectionné parmi le groupe constitué du polytétrafluoroéthylène, du polyester, du polyuréthane et d'une polyoléfine.

**4.** Procédé selon la revendication 3, dans lequel le polytétrafluoroéthylène comprend du polytétrafluoroéthylène expansé.

**5.** Procédé selon la revendication 4, dans lequel le stratifié de film polymère/textile comprend en outre du polyuréthane appliqué sur au moins une face du film de polytétrafluoroéthylène expansé.

**6.** Procédé selon l'une quelconque des revendications précédentes, dans lequel le stratifié de film polymère/textile est imperméable à l'eau.

**7.** Procédé selon la revendication 6, dans lequel le stratifié de film polymère/textile est respirant.

**8.** Procédé selon l'une quelconque des revendications précédentes, dans lequel le film polymère a une première face qui adhère à une première couche du matériau textile et une seconde face qui adhère à une seconde couche du matériau textile.

**9.** Procédé selon l'une quelconque des revendications précédentes, dans lequel le premier cylindre à motifs et le second cylindre à motifs sont chauffés jusqu'à une température comprise entre environ 140°C et environ 204°C tout en faisant passer le stratifié de film polymère/textile entre les deux.

**10.** Procédé selon l'une quelconque des revendications précédentes, dans lequel le stratifié de film polymère/textile est comprimé entre les parties hautes du premier et du second cylindres à motifs, et le stratifié de film polymère/textile n'est pas comprimé entre les parties basses du premier cylindre à motifs et du second cylindre à motifs.

**11.** Vêtement produit en utilisant un stratifié formé selon le procédé selon la revendication 1.

**12.** Vêtement selon la revendication 11, dans lequel le vêtement est sélectionné parmi le groupe constitué des chemises, des pantalons, des gants, des chaussures, des chapeaux et des vestes.

**13.** Sac de couchage produit en utilisant un stratifié formé selon le procédé selon la revendication 1.

**14.** Tente produite en utilisant un stratifié formé selon le procédé selon la revendication 1.

FIGURE 1

FIGURE 2

FIGURE 3

FIGURE 4

FIGURE 5

FIGURE 6

FIGURE 7

FIGURE 8

la\em5\jnorvell\0310060 embossed patterns\stripe1a.tif

Matrix: 640x480
Signal: Unkn
Data: ADC

Build End

Range: 106-190

Color Area | Area Frac: 34.49%

FIGURE 9

FIGURE 10

FIGURE 11

FIGURE 12

FIGURE 13

FIGURE 14

FIGURE 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3953566 A, Gore
- US 4187390 A
- US 5374473 A, Knox
- US 5792525 A, Fuhr
- US 4732629 A
- US 4194041 A, Gore
- US 5660918 A, Dutta
- US 4985296 A
- US 5289644 A, Driskill